(19) **Europäisches Patentamt European Patent Office Office européen des brevets**

(11) **EP 1 588 218 B1**

(12) **FASCICULE DE BREVET EUROPEEN**

(45) Date de publication et mention
de la délivrance du brevet:
**14.11.2007 Bulletin 2007/46**

(21) Numéro de dépôt: **04700464.3**

(22) Date de dépôt: **07.01.2004**

(51) Int Cl.:
*G03B 21/62* (2006.01)

(86) Numéro de dépôt international:
**PCT/FR2004/000015**

(87) Numéro de publication internationale:
**WO 2004/072722 (26.08.2004 Gazette 2004/35)**

(54) **ECRAN DE PROJECTION ET DE RETROPROJECTION**

SCHIRM FÜR AUFLICHT- UND DURCHLICHTPROJEKTION

SCREEN FOR FRONT AND REAR PROJECTION

(84) Etats contractants désignés:
**AT BE BG CH CY CZ DE DK EE ES FI FR GB GR
HU IE IT LI LU MC NL PT RO SE SI SK TR**

(30) Priorité: **15.01.2003 FR 0300381**

(43) Date de publication de la demande:
**26.10.2005 Bulletin 2005/43**

(73) Titulaire: **SAINT-GOBAIN GLASS FRANCE
92400 Courbevoie (FR)**

(72) Inventeurs:
• **BERTIN-MOUROT, Thomas
F-75013 Paris (FR)**
• **LEBAIL, Yannick
F-60150 Chevincourt (FR)**

(74) Mandataire: **Cardin, Elise
Saint-Gobain Recherche
39, quai Lucien Lefranc
93303 Aubervilliers Cedex (FR)**

(56) Documents cités:
**EP-A- 0 414 313         EP-A- 0 478 187
EP-A- 0 561 551         EP-A- 0 770 902
WO-A- 02/41074         GB-A- 1 140 416
US-A- 3 609 000         US-A- 3 655 263
US-A1- 2002 093 607   US-A1- 2002 163 722
US-B1- 6 304 378         US-B1- 6 327 088**

**Description**

La présente invention est relative à un écran de rétroprojection et/ou de projection. Elle vise plus particulièrement un écran adapté pour permettre la visualisation sans défaut optique d'une image sur chacune des faces de l'écran, cette image pouvant être issue par exemple d'un projecteur vidéo ou plus généralement d'une source lumineuse positionnée en regard de l'une de des faces de l'écran.

Pour les besoins de compréhension, l'écran de projection selon l'invention comporte deux faces : la face principale de l'écran sur laquelle est projetée l'image provenant de la source lumineuse et qui est positionnée généralement dans la même région de l'espace que la source lumineuse, et la face opposée de l'écran sur laquelle apparaît par transparence l'image projetée sur la face principale. Un écran de rétroprojection dispose d'une face principale et d'une face opposée possédant les mêmes caractéristiques que l'écran de projection précédemment mentionné mais s'en distingue par le fait que l'utilisateur et la source lumineuse ne sont pas situés dans la même région de l'espace mais se trouvent de part et d'autre de l'écran.

Au sens de la présente invention, on utilisera le terme écran qui englobe indifféremment un écran de projection et un écran de rétroprojection.

On connaît plusieurs types de familles d'écran de rétroprojection qui assurent la visualisation d'une telle image. Ainsi, on connaît des écrans ou diffuseurs plastiques, ces écrans, rigides et translucides comportent une matrice de matière plastique constituant la trame de l'écran qui incorpore une pluralité de particules d'oxydes métalliques ($SiO_2$ par exemple). Ces écrans n'autorisent une visualisation correcte d'une image sans défaut optique selon un angle de vue pouvant atteindre 180° que sur l'une des faces de l'écran, l'image apparaissant par transparence sur l'autre face de l'écran étant quant à elle de moindre qualité optique (présence de flou). De plus les écrans de rétroprojection en matière plastique sont sensibles aux rayonnements ultraviolet et infrarouge ainsi qu'à l'humidité, ce qui limitent leur longévité et la pérennité de leur qualité optique.

On connaît par ailleurs les écrans qui se déroulent et s'enroulent à partir d'un tambour solidaire d'un support. Ils sont également en plastique mais ne sont pas translucides. Ils fonctionnent uniquement en réflexion et pas en transmission.

Une autre technologie d'écran a été développée à partir de diffuseurs fonctionnant selon la technologie des cristaux liquides. L'avantage principal de ce type d'écran réside d'une part, dans leur faible épaisseur (de l'ordre de 20 $\mu$m) et d'autre part, surtout dans le fait que sous l'action d'un champ électrique ils deviennent transparents et ne sont plus diffusants, l'utilisation en rétro-projection n'étant cependant qu'une utilisation secondaire.

Par contre au titre des inconvénients, on note l'angle de vue qui est très limité (l'angle de vue est de l'ordre d'une trentaine de degrés) et l'image qui apparaît sur la face opposée est de mauvaise qualité optique malgré la faible épaisseur de l'écran (présence de flou).

Par le document US 5 870 224, on connaît une structure d'écran de projection muni d'une part, sur sa face principale d'une pluralité de dispositifs optiques (lentilles de Fresnel et microlentilles cylindriques) et d'autre part, sur sa face opposée une pluralité d'orifices (zones transparentes et légèrement diffusantes) judicieusement positionnés par rapport aux foyers optiques respectifs desdites lentilles cylindriques, permettant de visualiser l'image projetée.

Cette structure d'écran est particulièrement coûteuse, l'angle de vue est également réduit (environ 35 °) et ce dispositif n'est pas propice pour la projection directe (vue par réflexion).

Enfin, une dernière famille d'écran de rétroprojection est constituée par les diffuseurs holographiques.

Le principal avantage de cette technologie réside dans la transparence de l'écran et le réglage de l'angle de vue. Néanmoins, là encore, cette structure d'écran est coûteuse, ce qui la cantonne à des écrans de petits formats. On note également la présence de flou sur la face opposée de l'écran, malgré la transparence de l'écran.

La présente invention vise donc à pallier les inconvénients des dispositifs connus de l'art antérieur en proposant un écran de rétroprojection et/ ou de projection adapté pour la visualisation d'une image sur les deux faces de l'écran selon un angle de vue pouvant atteindre 180° sur chacune des faces, cette visualisation s'effectuant sans défauts optiques sur chacune des faces, c'est à dire avec une excellente homogénéité de l'image visualisée.

A cet effet, l'écran de rétroprojection et/ou de projection selon l'invention se caractérise en ce qu'il comporte au moins un premier substrat verrier associé à une couche diffusante à effet surfacique, la couche diffusante étant constituée d'éléments comprenant des particules et un liant minéral, le liant permettant d'agglomérer entre-elles les particules, ladite couche étant adaptée pour obtenir un angle de vue égal à 180° sur chacune des faces de ladite couche.

Pour une meilleure compréhension de l'invention, on donnera ci-après une définition du mot « surfacique ». Une couche est dite surfacique lorsque son épaisseur varie dans la plage 0.5 à 50 $\mu$m, notamment entre 0.5 à 10 $\mu$m, et de préférence entre 0.5 à 5$\mu$m. Cette définition est à opposer à une couche diffusante à effet volumique.

Dans des modes de réalisation préférés de l'invention, on peut éventuellement avoir recours en outre à l'une et/ ou à l'autre des dispositions suivantes :

-     la résolution de l'écran est comprise entre $5.10^3$ et $1.10^5$ DPI,

- la couche diffusante est déposée sur l'une des faces du premier substrat, un intercalaire de feuilletage est déposé sur la face opposée dudit premier substrat, ledit intercalaire étant lui-même associé à un second substrat,
- le second substrat est un substrat teinté,
- la couche diffusante est déposée sur l'une des faces d'un premier substrat, ledit premier substrat étant lui-même associé à un second substrat de manière à conformer un double vitrage,
- le premier substrat et la couche diffusante sont associés à un troisième substrat, un cordon périphérique séparant la face du premier substrat revêtue de ladite couche diffusante du troisième substrat,
- les particules sont métalliques ou des oxydes métalliques
- les particules sont choisies parmi les oxydes de silice, d'alumine, de zircone, de titane, de cérium, ou d'un mélange d'au moins deux de ces oxydes.
- la taille des particules est comprise entre 50 nm et 1 $\mu$m,
- l'épaisseur de la couche diffusante est comprise entre 0.5 et 5$\mu$m,
- l'un au moins des second, troisième substrats est un substrat verrier,
- l'un au moins des second, troisième substrats est un substrat transparent à base de polymère, par exemple en polycarbonate,
- l'un au moins des premier, second, troisième substrats comporte un revêtement ayant une autre fonctionnalité, notamment un revêtement à fonction bas-émissive, à fonction anti-statique, anti-buée, anti-salissures, anti-reflet.

D'autres avantages et particularités de l'invention apparaîtront à la lumière de la description détaillée qui va suivre.

Ainsi selon un mode de réalisation de l'invention, la couche diffusante à effet surfacique est constituée de particules agglomérées dans un liant, lesdites particules présentant un diamètre moyen compris entre 0,3 et 2 microns, ledit liant étant dans une proportion comprise entre 10 et 40% en volume et les particules formant des agrégats dont la dimension est comprise entre 0,5 et 5 microns, conduisant à des résolutions comprises entre $5.10^3$ et $1.10^5$ DPI (Dot Per Inch), ladite couche présentant une atténuation de contraste supérieure à 40 % et de préférence supérieure à 50 %. Cette couche diffusante est décrite dans la demande WO0190787 et le contenu de cette demande est incorporé dans la présente demande par référence.

Les particules sont choisies parmi des particules semi-transparentes et de préférence des particules minérales telles que des oxydes, des nitrures, des carbures.

Les particules seront de préférence choisies parmi les oxydes de silice, d'alumine, de zircone, de titane, de cérium, ou d'un mélange d'au moins deux de ces oxydes.

De telles particules peuvent être obtenues par tous moyens connus de l'homme du métier et notamment par précipitation ou par pyrogénation. Les particules présentent une granulométrie telle qu'au moins 50% des particules s'écartent de moins de 50% du diamètre moyen.

Lorsque la couche est en position extérieure, le liant est également choisi avec une résistance à l'abrasion suffisante pour subir sans endommagement toutes les manipulations du système de rétroprojection, par exemple, notamment lors du montage des autres substrats formant l'écran.

Le liant est minéral, par exemple pour favoriser une résistance à la température de la couche.

Le liant possède un indice différent de celui des particules et la différence entre ces deux indices est de préférence d'au moins 0,1. L'indice des particules est supérieur à 1,7 et celui du liant est de préférence inférieur à 1,6.

Le liant est choisi parmi les silicates de potassium, les silicates de sodium, les silicates de lithium, les phosphates d'aluminium ...

Pour favoriser la formation d'agrégats à la dimension souhaitée, on prévoit l'adjonction d'au moins un additif conduisant à une répartition aléatoire des particules dans le liant. L'additif ou agent de dispersion est choisi parmi les agents suivants, un acide, une base, ou des polymères ioniques de faible masse moléculaire, notamment inférieure à 50 000 g/mol.

Il est encore possible d'ajouter d'autres agents et par exemple un agent mouillant tel que des tensioactifs non ioniques, anioniques ou cationiques, pour fournir une couche homogène à une grande échelle.

Il est encore possible d'ajouter des agents de modification rhéologique, tels que des éthers cellulosiques.

La couche ainsi définie peut être déposée selon une épaisseur comprise entre 1 et 20 microns. Les méthodes de dépôts d'une telle couche peuvent être tous moyens connus de l'homme du métier tels que des dépôts par sérigraphie, par enduction d'une peinture, par « dip-coating », par « spin-coating », par « flow-coating », par pulvérisation .... On peut noter cependant que la technique de dépôt par sérigraphie sera préférée lorsque le substrat sera destiné à subir des traitements thermiques (trempe par exemple), compte tenu de dispositions réglementaires en matière de sécurité.

Lorsque l'épaisseur souhaitée de la couche déposée est supérieure à 2 microns, on utilise un procédé de dépôt du type sérigraphie.

En variante, un exemple préféré de réalisation d'un liant mis en oeuvre dans un procédé de dépôt par sérigraphie, on utilise un liant essentiellement constitué de fritte de verre ou de fondant. Ce fondant ou fritte de verre peut être par exemple à base d'un mélange d'oxyde de zinc ,d'oxyde de bore, de silice, d'oxyde de sodium.

Ce liant trouve son application dans la présente invention en tant que liant pour la couche diffusante utilisée dans l'écran de rétroprojection et/ou de projection.

Lorsque l'épaisseur de la couche est inférieure à 4 microns, le dépôt est de préférence effectué par flow-coating ou par pulvérisation. On prévoit également de réaliser une couche dont l'épaisseur varie selon la zone de couverture sur la surface ; une telle réalisation peut permettre de corriger des inhomogénéités intrinsèques d'une source de lumière qui est restituée au niveau de l'écran. Par exemple, il est possible de cette façon de corriger l'intensité des sources lumineuses selon l'angle de vue de l'utilisateur et d'ajuster ainsi le gain Le gain se définit de la manière suivante :

$$\text{Gain} = \text{la luminance obtenue avec l'écran en vision centrale / la luminance obtenue si on avait un écran lambertien de gain 1 en vision centrale.}$$

On peut aussi définir le gain de la manière suivante :

$$\text{Gain} = \text{luminance centrale} * \text{aire de l'écran / flux du projecteur}$$

A partir de ces définitions, on dit qu'un gain est de 1, lorsque l'écran de projection permet un angle de vue de 180° (écran lambertien)

De plus, si l'écran permet de réorienter les rayons lumineux dans un angle de vue plus restreint et ainsi augmenter la luminance de l'image dans ces angles, l'écran présentera alors un gain supérieur à 1.

Selon une autre réalisation, on peut envisager un dépôt sélectif de la couche surfacique, dans ce cas celle-ci n'est déposée qu'au niveau d'une partie du substrat, la partie restante transparente.

Selon l'invention, la couche diffusante est déposée sur un premier substrat transparent, possédant une forme plane ou non selon les applications.

La couche diffusante à effet surfacique permet de réaliser un écran dont la résolution est d'au moins $10^5$ DPI (Dot Per Inch), voire $10^6$ DPI

Afin d'améliorer la tenue mécanique du premier substrat revêtu de la couche diffusante à effet surfacique telle que précédemment décrite, on associe au premier substrat, au niveau de sa face opposée (celle qui n'est pas recouverte de la couche diffusante), un intercalaire de feuilletage, ce dernier pouvant être réalisé en PVB (polyvinylbutyral), en PU (polyuréthanne), par exemple, lui-même étant associé à un second substrat, de préférence teinté. A titre d'exemple non limitatif, il peut s'agir par exemple d'un verre permettant d'améliorer le contraste tel qu'un verre gris de 40 % de TL, ou un « parsol » gris avec une transmission lumineuse comprise 30 % et 70 %.

On associe à cet élément feuilleté constitué du premier substrat, de l'intercalaire de feuilletage, du second substrat, un troisième substrat.

En périphérie de la face du premier substrat qui comporte sa couche diffusante, on dépose par des moyens connus (extrusion par exemple) un cordon de joint en matière plastique (en PU, en EPDM par exemple). Sur ce cordon de joint, on dépose un troisième substrat. Ce cordon de matière assure la tenue mécanique de l'assemblage et préserve une lame de fluide gazeux (notamment de l'air) entre les deux substrats, ce qui favorise les phénomènes de diffusion au niveau de la couche fonctionnelle diffusante.

Selon une caractéristique de l'invention, les divers substrats utilisés (premier, second, troisième) sont soit des substrats verriers, soit des substrats en polymère (PMMA, polycarbonate).

Quel que soit le mode de réalisation, l'écran de rétroprojection et/ou de projection selon l'invention permet de restituer une image dont l'homogénéité est d'au moins de 80% et de préférence de l'ordre de 85 %.

On dit qu'une image est homogène lorsque l'observation faite à l'oeil de cette image sur un écran de dimension 600x450mm ne montre aucune variation d'intensité de l'image liée à la qualité de la couche par ex. L'oeil commence à « voir » des variations d'intensité que lorsque l'écart d'intensité est supérieur à 15% d'un endroit à l'autre de l'écran.

L'écran de visualisation est adapté pour permettre la visualisation d'une image projetée sur chacune des faces de l'écran, selon un angle de vue inférieur ou égal à 180°.

Dans la présente invention, l'angle de vue est l'angle pour lequel la luminance est égale à la moitié de la luminance au centre. Dans ce cas, la visualisation s'effectue sans présence de défaut optique (flou, déformation, effet de bord, aberration chromatique, inhomogénéité locale de luminance sur chacune des faces.

Une variante de réalisation consiste à incorporer à l'assemblage au niveau de l'une des faces de l'un des premier, second, troisième substrats, un revêtement ayant une fonctionnalité. Il peut s'agir d'un revêtement à fonction de blocage des rayonnements de longueur d'onde dans l'infrarouge (utilisant par exemple une ou plusieurs couches d'argent entourées de couches en diélectrique, ou des couches en nitrures comme TiN ou ZrN ou en oxydes métalliques ou en acier ou en alliage Ni-Cr), à fonction bas-émissive (par exemple en oxyde de métal dopé comme SnO2 :F ou oxyde d'indium dopé à l'étain ITO ou une ou plusieurs couches d'argent), anti-buée (à l'aide d'une couche hydrophile), anti-salissures (revêtement photocatalytique comprenant du $TiO_2$ au moins partiellement cristallisé sous forme anatase), ou encore un empilement anti-reflet du type par exemple $Si_3N_4/SiO_2/Si_3N_4/SiO_2$.

Les applications envisagées par l'invention sont notamment les systèmes de rétroprojection ou de projection par exemple utilisés pour la visualisation d'image provenant par exemple de projecteurs vidéo pour des utilisations de murs d'image dans des stades, de tableaux de visualisation d'informations assemblés en paroi ou suspendu pour un usage urbain domestique. Bien entendu, l'écran de projection et/ou de rétroprojection peut être utilisé comme une cloison ou une paroi de séparation entre deux enceintes.

Au sens de l'invention, la cloison délimite une paroi entre deux volumes différents, chacun pouvant bénéficier d'une information diffusée de part et d'autre de la cloison, tel qu'un séjour ou un salon, une autre pièce dans une habitation, ou plus généralement une paroi délimitant un volume intérieur d'un volume extérieur (l'un des volumes pouvant être la rue), une cloison de séparation en général.

De même, au sens de l'invention, l'écran de projection et/ou de rétroprojection peut constituer un panneau d'information à vocation publicitaire destiné à diffuser un message dans un lieu de vente, le message étant visible de tous les points de vue.

L'écran selon l'invention précédemment décrit offre de multiples avantages :

- compte tenu que les divers éléments le constituant sont réalisés dans une technologie essentiellement minérale, la sensibilité de cet écran à l'humidité et aux rayonnements UV est très réduite,
- le recours à une couche diffusante à effet surfacique, dont l'angle de vue peut atteindre 180° limite les phénomènes de « hot spot ». (Le « hot spot » consiste pour l'utilisateur à apercevoir, dans l'axe de projection et à travers l'écran, la source lumineuse).

**Revendications**

1. Ecran de rétroprojection et de projection, comportant au moins un premier substrat verrier associé à une couche diffusante à effet surfacique, la couche diffusante étant constituée d'éléments comprenant des particules et un liant, **caractérisé en ce que** le liant est minéral et permet d'agglomérer entre-elles les particules, ladite couche étant adaptée pour obtenir un angle de vue égal à 180° sur chacune des faces de ladite couche.

2. Ecran selon la revendication 1, dans lequel la résolution de l'écran est comprise entre $5.10^3$ et $1.10^5$ DPI.

3. Ecran selon l'une des revendications 1 ou 2, dans lequel la couche diffusante est déposée sur l'une des faces du premier substrat, un intercalaire de feuilletage est déposé sur la face opposée dudit premier substrat, ledit intercalaire étant lui-même associé à un second substrat.

4. Ecran selon la revendication 3, dans lequel le second substrat est un substrat teinté.

5. Ecran selon l'une des revendications 1 ou 2, dans lequel la couche diffusante est déposée sur l'une des faces d'un premier substrat, ledit premier substrat étant lui-même associé à un second substrat de manière à conformer un double vitrage.

6. Ecran selon l'une des revendications précédentes, dans lequel le premier substrat et la couche diffusante sont associés à un troisième substrat, un cordon périphérique séparant la face du premier substrat revêtue de ladite couche diffusante du troisième substrat.

7. Ecran selon l'une des revendications précédentes, dans lequel les particules sont métalliques ou des oxydes métalliques.

8. Ecran selon l'une des revendications précédentes, dans lequel les particules sont choisies parmi les oxydes de silice, d'alumine, de zircone, de titane, de cérium, ou d'un mélange d'au moins deux de ces oxydes.

9. Ecran selon l'une des revendications précédentes, dans lequel la taille des particules est comprise entre 50 nm et

1 $\mu$m.

10. Ecran selon l'une des revendications précédentes, dans lequel le liant est essentiellement constitué de fritte de verre ou de fondant.

11. Ecran selon la revendication 10, dans lequel le fritte de verre ou le fondant est à base d'un mélange d'oxyde de zinc, d'oxyde de bore, d'oxyde de sodium et de silice.

12. Ecran selon l'une des revendications précédentes, dans lequel l'épaisseur de la couche diffusante est comprise entre 0.5 et 5 $\mu$m.

13. Ecran selon l'une des revendications précédentes, dans lequel l'un au moins des second, troisième substrats est un substrat verrier.

14. Ecran selon l'une des revendications 1 à 12, dans lequel l'un au moins des second, troisième substrats est un substrat transparent à base de polymère.

15. Ecran selon l'une des revendications précédentes, dans lequel l'un au moins des premier, second, troisième substrats comporte un revêtement ayant une autre fonctionnalité, notamment un revêtement à fonction bas-émissive, à fonction anti-statique, anti-buée, anti-salissures, anti-reflet.

16. Utilisation d'un écran selon l'une des revendications précédentes en tant que cloison de séparation délimitant une paroi entre deux volumes différents, chacun pouvant bénéficier d'une information diffusée de part et d'autre de ladite cloison.

## Claims

1. Backprojection and projection screen comprising at least a first glass substrate joined to a scattering layer producing a subsurface effect, the scattering layer consist of elements comprising particles and a binder, **characterized in that**, the binder is a mineral binder and allows the particles to be mutually agglomerated, said layer being suitable for obtaining a viewing angle equal to 180° on both faces of the said layer.

2. Screen according to Claim 1, in which the resolution of the screen is between $5\times10^3$ and $1\times10^5$ dpi.

3. Screen according to either of Claims 1 and 2, in which the scattering layer is deposited on one of the faces of the first substrate and a lamination interlayer is deposited on the opposite face of the said first substrate, the said interlayer in turn being joined to a second substrate.

4. Screen according to Claim 3, in which the second substrate is a tinted substrate.

5. Screen according to either of Claims 1 and 2, in which the scattering layer is deposited on one of the faces of a first substrate, the said first substrate being in turn joined to a second substrate so as to form a double-glazing unit

6. Screen according to one of the preceding claims, in which the first substrate and the-scattering layer are joined to a third substrate, a peripheral bead separating that face of the first substrate which is coated with the said scattering layer from the third substrate.

7. Screen according to one of the preceding claims, in which the particles are metal or metal oxide particles.

8. Screen according to one of the preceding claims, in which the particles are chosen from silicon, aluminium, zirconium, titanium and cerium oxides, or a mixture of at least two of these oxides.

9. Screen according to one of the preceding claims, in which the particle size is between 50 nm and 1 $\mu$m.

10. Screen according to one of the preceding claims, in which the binder essentially consists of a glass frit or flux.

11. Screen according to Claim 10, in which the glass frit or flux is based on a mixture of zinc oxide, boron oxide, sodium oxide and silica.

12. Screen according to Claim one of the preceding claims, in which the thickness of the scattering layer is between 0.5 and 5 μm.

13. Screen according to one of the preceding claims, in which at least one of the second and third substrates is a glass substrate.

14. Screen according to one of Claims 1 to 12, in which at least one of the second and third substrates is a transparent substrate based on a polymer.

15. Screen according to one of the preceding claims in which at least one of the first, second and third substrates includes a coating having another functionality, especially a coating with a low-emissivity function or an antistatic, antimisting, antifouling or antireflection function.

16. Use of a screen according to one of the preceding claims as a separating partition defining a wall between two different volumes, it being possible for each to benefit from information broadcast on either side of the said partition.

**Patentansprüche**

1. Rückprojektions- und Projektionsbildschirm, der mindestens ein erstes aus Glas bestehendes Substrat umfasst, das mit einer lichtstreuenden Schicht mit Oberflächeneffekt versehen ist, wobei die lichtstreuende Schicht von Elementen gebildet wird, die Teilchen und ein Bindemittel umfassen, **dadurch gekennzeichnet, dass** das Bindemittel ein anorganisches ist und es erlaubt, die Teilchen untereinander zu agglomerieren, wobei diese Schicht geeignet ist, einen Betrachtungswinkel von 180° auf jeder Seite dieser Schicht zu erhalten.

2. Bildschirm nach Anspruch 1, bei welchem die Auflösung des Bildschirms $5\cdot10^3$ bis $1\cdot10^5$ DPI beträgt.

3. Bildschirm nach Anspruch 1 oder 2, bei welchem die lichtstreuende Schicht auf einer Seite des ersten Substrates und eine verbindende Zwischenschicht auf der anderen Seite des ersten Substrates aufgebracht ist, wobei diese Zwischenschicht ihrerseits mit einem zweiten Substrat verbunden ist.

4. Bildschirm nach Anspruch 3, bei welchem das zweite Substrat ein getöntes Substrat ist.

5. Bildschirm nach Anspruch 1 oder 2, bei welchem die lichtstreuende Schicht auf einer Seite eines ersten Substrates aufgebracht ist, wobei das erste Substrat seinerseits mit einem zweiten Substrat derart verbunden ist, dass ein Zweischeibenglas gebildet worden ist.

6. Bildschirm nach einem der vorhergehenden Ansprüche, bei welchem das erste Substrat und die lichtstreuende Schicht mit einem dritten Substrat verbunden sind, wobei eine Umfangsraupe die Seite des mit der lichtstreuenden Schicht überzogenen ersten Substrates von dem dritten Substrat trennt.

7. Bildschirm nach einem der vorhergehenden Ansprüche, bei welchem die Teilchen metallisch oder aus Metalloxiden sind.

8. Bildschirm nach einem der vorhergehenden Ansprüche, bei welchem die Teilchen aus Silicium-, Aluminium-, Zirconium-, Titan- und Ceroxid oder einem Gemisch aus mindestens zwei dieser Oxide ausgewählt sind.

9. Bildschirm nach einem der vorhergehenden Ansprüche, bei welchem die Teilchengröße 50 nm bis 1 μm beträgt.

10. Bildschirm nach einem der vorhergehenden Ansprüche, bei welchem das Bindemittel im Wesentlichen von einer Glasfritte oder Glaspaste gebildet wird.

11. Bildschirm nach Anspruch 10, bei welchem die Glasfritte oder Glaspaste auf der Basis eines Gemischs aus Zink-, Bor-, Natrium- und Siliciumoxid ist.

12. Bildschirm nach einem der vorhergehenden Ansprüche, bei welchem die Dicke der lichtstreuenden Schicht 0,5 bis

5 μm beträgt.

13. Bildschirm nach einem der vorhergehenden Ansprüche, bei welchem wenigstens eines von zweitem und drittem Substrat ein aus Glas bestehendes Substrat ist.

14. Bildschirm nach einem der Ansprüche 1 bis 12, bei welchem wenigstens eines von zweitem und drittem Substrat ein transparentes Substrat auf der Basis eines Polymers ist.

15. Bildschirm nach einem der vorhergehenden Ansprüche, bei welchem wenigstens eines von erstem, zweitem und drittem Substrat eine Beschichtung mit einer anderen Funktionalität, insbesondere eine Beschichtung mit niedrig emittierender, antistatischer, beschlagabweisender, schmutzabweisender und anti-reflektierender Funktion, umfasst.

16. Verwendung eines Bildschirms nach einem der vorhergehenden Ansprüche als Trennwand, die eine Wand zwischen zwei verschiedenen Räumen begrenzt, wobei jeder von einer Information profitieren kann, die auf beiden Seiten dieser Trennwand angezeigt wird.

**RÉFÉRENCES CITÉES DANS LA DESCRIPTION**

**Documents brevets cités dans la description**

- US 5870224 A
- WO 0190787 A